# EUROPEAN PATENT APPLICATION

(11) **EP 2 157 760 A1**
(43) Date of publication of application: **24.02.2010**
(21) Application number: 09164009.4
(22) Date of filing: 29.06.2009
(51) Int. Cl.: H04L 29/06

(54) **Handling of H248 digitmap timers**

(30) Priority: 19.08.2008 IN CH20152008
(71) Applicant: Alcatel Lucent, 75008 Paris (FR)
(72) Inventor: Rameshwaran, Thulasidoss, 600024 Chennai - Tamilnadi (IN); Kumar, Ramadoss, 600087 Chennai -Tamilnadu (IN)
(74) Representative: Nicolle, Olivier

(57) **Abstract**

A method of handling a DigitMap (DM) between Media Gateway Controller (MGC) and Media Gateway (MG) is disclosed. The DigitMap timer values are modified by providing only the DigitMap (DM) name and the timer values that needs to be modified to the Media Gateway (MG). The method includes MGC checking if modify request is only for the timer values or also for the DM pattern, checking if DM name is known or unknown to MGC, MGC specifying the DM name and the timer values to be modified to the MG when the DM name is known, MGC creating a new DM if said DM name is not known to MGC, MGC specifying the new DM name and the timer values to be modified to the MG, MG verifying the DM pattern specified in the modify request and updating the timer values to MGC specified values in DM.

## Description

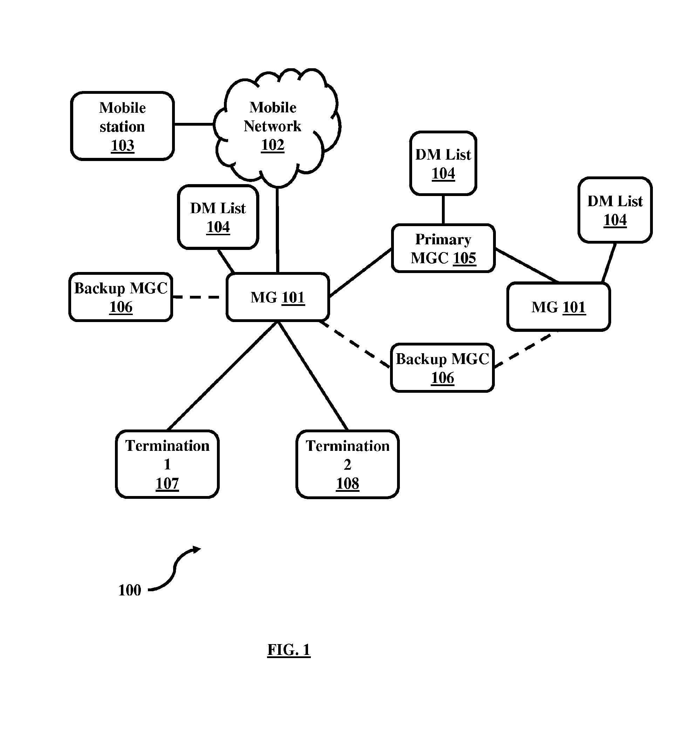

The following specification particularly describes and ascertains the nature of this invention and the manner in which it is to be performed:-
*1*. The embodiments herein generally relate to telephone communications, and, more particularly, to handling of DigitMaps in a telecommunications network.
2. DigitMap (DM) is a dialing plan preloaded into the Media Gateway (MG) by a management action and referenced by a name in an event descriptor. DigitMaps defined on the ROOT/termination level are global and can be used on every termination in the media gateway if the same DigitMap name is not defined on the referred termination. The collection of digits according to a DigitMap is protected by three timers, namely start timer, short timer and long timer. The timers are configurable parameters to the DigitMap. The default values of the timers provided on the media gateway by the operators can be overridden by the values specified within the DigitMap.
3. If a Media Gateway Controller (MGC) needs to change the timer associated to a DM, then MGC must send the DM pattern along with the timer values to be modified to MG. For this, MGC must be aware of the DigitMap name used on root/termination level in the MG and its corresponding DigitMap value. The MGC may be aware of the parameters only if the MGC has loaded the DigitMap to the specified MG. In some cases where DigitMap is preloaded in the MG, then MGC is not aware of the DigitMap name and timer values configured in the MG. For example, in cases like Fixed Destination Call Timed (FDC_T), and coin box, where the initial timer may be changed by operator at any instance for changing the FDC_T timeout value or for changing dial tone duration of a coin box user or the like, MGC needs to get the DigitMap provisioned in the MG via audit value (value of the current Digitmap for termination provided by a DigitMap descriptor for auditing unnamed DigitMaps) then use the credentials for timer updation.
4. In the existing solutions, MGC can possibly acquire the MG provisioned DM via AuditValue when the MG registers with the MGC or when the modify request is sent by the operator to change any of the timer values for timer updation. But, if MGC acquires MG provisioned default DigitMap during registration, then MGC needs to remember the MG provisioned default DigitMap. Also, MGC does not get any implicit trigger from MG when there is a change/reconfiguration in the default DigitMap value after MG registration. Thus DigitMap obtained when MG registers in the MGC is not the correct DigitMap for the registered MG. Further, obtaining DigitMap via AuditValue during timer modify request leads to delayed processing of original message. Further, when MGC is unaware of the configured DigitMap for the termination, it may send a hardcore DigitMap pattern with the timer values to MG. The MGC should send a generic pattern to cover all the possible DigitMaps, which is not a feasible solution as every customer market requires dynamic DigitMap patterns corresponding to the market demand.
5. Currently, for MGC to modify the DigitMap timer, MGC needs to send a bigger size H.248 message including the complete DM pattern structure along with the timer values to be modified to MG. If the H.248 message size is bigger, then this may result in high data transfer in the MGC to MG message traffic. Further, analyzing the H.248 message with the complete DM pattern is time consumable and may also cause overburden to the MG.
6. In view of the foregoing, an embodiment herein provides a method of modifying a dialing plan in a Media Gateway (MG) by providing a DigitMap (DM) pattern and timer values, the method comprising a Media Gateway Controller (MGC) checking if modify request is only for the timer values or also for the DigitMap pattern. If the modify request is only for the timer values, the method further comprising of MGC checking if the DM name is known to MGC, if the DM name is known, the MGC specifying the DM name and the timer values to be modified to the MG. If the DM name is not known to MGC, the method further comprising the MGC creating a new DM, the MGC specifying the new DM name and the timer values to be modified to the MG, the MG verifying the DM pattern specified in the modify request and further modifying the timer values specified in the DM pattern. The DigitMap pattern and the timer values can be modified at the MG.
7. Embodiments herein further disclose a method wherein the MGC further performing checking if the modify request is for the timers associated to the DM and the DM pattern, checking if the DM name is known to MGC, specifying the DM name and the timer values to be modified to the MG if the DM name is known, creating a new DM name if the DM name is not known to the MGC, specifying the new DM name and the timer values to be modified to MG, checking if the DM specified in the modify request is for ROOT level and for termination level, sending a modify command on ROOT level if modify request is for ROOT level, and sending a modify command on termination level for modify request on termination level.
8. Embodiments herein further disclose a method wherein the MG further performing checking if the modify request from MGC is only for the timer values, checking if the DM specified in the modify request is known in the MG, modifying the timer values on the DM pattern associated to the DM name if the DM is known in MG and if the DM name specified in the modify request is not known in MG, the MG further comprising at least one means adapted for performing at least one of checking if the DM is on ROOT level modify request, checking if the DM is on termination level modify request, obtaining DM pattern of the MG ROOT level default DM for ROOT level, obtaining the DM pattern of the DM at specified termination level in the MG, updating the timer values at ROOT level and termination level, and mapping the new DM to specified the DM name.
9. Embodiments herein further disclose a system for modifying a dialing plan in a Media Gateway (MG) by providing a DigitMap (DM) pattern and timer values, the system comprising at least one means adapted for checking if modify request is for the timer values and for the DigitMap pattern and if the modify request is only for the timer values, the system further comprising at least one means adapted for checking if the DM name is known to MGC, if the DM name is known, the system comprising a means adapted for specifying the DM name and the timer values to be modified. If the DM name is not known to MGC, the system further comprising at least one means adapted for creating a new DM, specifying the new DM name and the timer values to be modified to MG, verifying the DM pattern specified in the modify request, and modifying the timer values specified in the DM pattern. The DigitMap pattern and the timer values can be modified at the MG.
10. Embodiments herein further disclose a system including an MGC, where the MGC comprises at least one means adapted for performing at least one of checking if the modify request is for the timers associated to the DM and the DM pattern, checking if the DM name is known to MGC, specifying the DM name and the timer values to be modified to the MG if the DM name is known, creating a new the DM name if the DM name is unknown to the MGC, specifying the new DM name and the timer values to be modified to MG, checking if the DM specified in the modify request is for ROOT level and for termination level, sending a modify command on ROOT level if modify request is for ROOT level, and sending a modify command on termination level for modify request on termination level.
11. Embodiments herein further disclose a system including an MG, where MG comprises of at least one means adapted for checking if the modify request from MGC is only for the timer values, checking if the DM specified in the modify request is known in the MG, modifying the timer values on the DM pattern associated to the DM name if the DM is known in MG and if the DM name specified in the modify request is not known in MG, the MG further comprising at least one means adapted for performing at least one of checking if the DM is on ROOT level modify request, checking if the DM is on termination level modify request, obtaining DM pattern of the MG ROOT level default DM for ROOT level, obtaining the DM pattern of the DM at specified termination level in the MG, updating the timer values at ROOT level and termination level, and mapping the new DM to specified the DM name.
12. Embodiments herein further disclose a Media Gateway Controller (MGC) comprising at least one means adapted for checking if modify request for timers is associated to DM or the DM pattern, checking if the DM name is known to MGC, specifying the DM name and the timer values to be modified to the MG if the DM name is known, creating a new the DM name if the DM name is unknown to the MGC specifying the new DM name and the timer values to be modified to MG, checking if the DM specified in the modify request is for ROOT level or for termination level, sending a modify command on ROOT level if modify request is for ROOT level, and sending a modify command on termination level for modify request on termination level.
13. Embodiments herein further disclose a Media Gateway (MG) comprising of at least one means adapted for checking if modify request from MGC is only for timer values, checking if DM specified in the modify request is known in the MG, modifying the timer values on the DM pattern associated to the DM name if the DM is known in MG, if the DM name specified in the modify request is not known in MG, the MG further comprising at least one means adapted for performing at least one of, checking if the DM is on ROOT level modify request or on termination level modify request, obtaining DM pattern of the MG ROOT level default DM for ROOT level, obtaining the DM pattern of the DM at specified termination level in the MG, updating the timer values at ROOT level and termination level, and mapping the new DM to specified the DM name.
14. These and other aspects of the embodiments herein will be better appreciated and understood when considered in conjunction with the following description and the accompanying drawings.
15. The embodiments herein will be better understood from the following detailed description with reference to the drawings, in which:
16. FIG. 1 is a block diagram illustrating the network elements involved in handling DigitMap (DM) between Media Gateway Controller (MGC) and Media Gateway (MG);
17. FIG. 2 is a block diagram illustrating the functional elements of a Media Gateway Controller (MGC), according to an embodiment herein;
18. FIG. 3 is a block diagram illustrating the functional elements of a Media Gateway (MG), according to an embodiment herein;
19. FIG. 4 illustrates a flowchart depicting a method of modifying the DigitMap timer value at MGC level, according to an embodiment herein; and
20. FIG. 5 illustrates a flowchart depicting a method of modifying the DigitMap timer value at MG level, according to an embodiment herein.
21. The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.
22. The embodiments herein achieve a method for modifying the DigitMap timer values by providing the DigitMap (DM) name and the timer values that needs to be modified to the Media Gateway (MG). Referring now to the drawings, and more particularly to FIGS. 1 through 5, where similar reference characters denote corresponding features consistently throughout the figures, there are shown embodiments.
23. The embodiments herein disclose a method to handle the DigitMap timer value modification. The MGC specifies only the DM name and the timer values to be modified without specifying the whole DM pattern to the MG. When a modify request is received, MGC analyses the request and identifies if only the timer values or also the pattern of the DM need to be modified. If the request is only to modify the timer values, then MGC provides the DM name and the timer values to be modified to the MG. Further, if the DM name is known to MGC, then MGC specifies the DM and the to be modified timer values to MG and the MG modifies the timer values to the MGC specified value on the DM pattern associated to the DM. The DM name may be applicable for ROOT level or termination level according to the request from MGC. If the DM associated with the modify request is not known to MGC, then MGC creates a new DM and passes on to MG with the timer values to be modified. The MG then accepts the DM pattern of the MG root level default DM for root level request and DM pattern of the existing DM at specified termination level request in MG and updates the timer value and maps the new DM to the specified DM name. MGC can overcome the message load towards the MG by reducing the message size which in turn reduces the packet traffic between MGC and MG.
24. FIG. 1 is a block diagram illustrating the network elements involved in handling DigitMap (DM) between Media Gateway Controller (MGC) and Media Gateway (MG). The network 100 includes a Media Gateway (MG) 101 connected to a mobile network 102, a primary MGC 105, backup MGC 106 and with multiple termination levels instanced as termination-1 107and termination-2 108. The mobile network 102, which is connected to a mobile station 103. A DigitMap 104 is a dialing plan residing in the MG 101 used for detecting and reporting digit events received on termination. A DigitMap 104 list defines patterns against which sequences of a specified set of events that are to be matched by the MG 101 for reporting the digits as a group to MGC 105. A Media Gateway Controller (MGC) 105 is a system used in Voice over IP (VoIP) telephony architectures and controls a number of Media Gateways (MG) 101. The MGC 105 receives signaling information like dialed digits from the MG 101 according to an instruction of DM 104 to alert the called party, to send and receive voice data and the like. The MGC 105 can also be termed as Call Agent when referred in the context of Media Gateway Control Protocol (MGCP). MGC 105 can interface with other signaling protocols for interconnection with the traditional telephone system. MGC 105 provides functions as call routing, control of the connection, control of network resources such as ports on the Media Gateway, the available network bandwidth, and so on, maintaining call state information for every call on the Media Gateway 101, and interfacing with other services and/or servers, such as the Application, Accounting or Routing functions that are required in support of the call. A DigitMap descriptor contains a DigitMap name and a DigitMap pattern to be assigned. DigitMaps 104 further includes timers which are configurable parameters in DigitMap 104. MGC 105 may load new DigitMap 104 on ROOT level to a MG 101 via GUI during the configuration or during the call on ROOT level or on individual termination. An MGC 105 can override the timers associated to a DigitMap 104. The network 100 also maintains a backup MGC 106 as a backup provision for a new MG 101 if the selected MGC 105 fails.

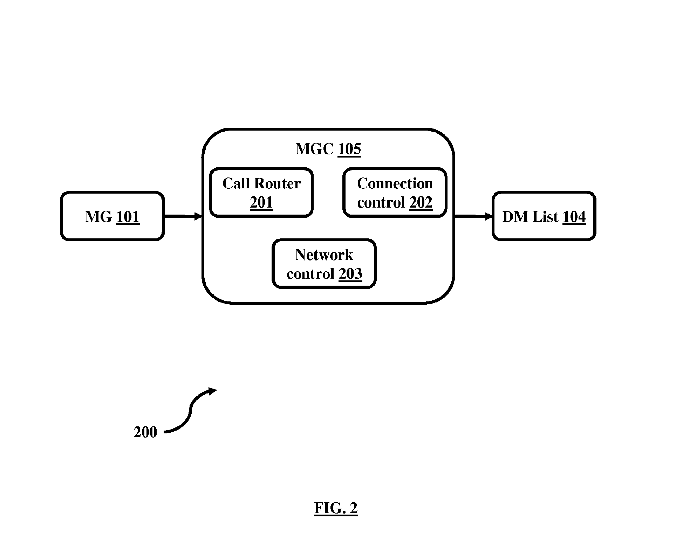

25. FIG. 2 is a block diagram illustrating the functional elements of a Media Gateway Controller (MGC), according to an embodiment herein. The Media Gateway Controller (MGC) 105 includes a call routing module 201, connection control module 202, and a network control module 203. The MGC 105 provides functions as receiving signaling information like dialed digits from the Media Gateway MG 101 and instructs MG 101 to alert the called party. The MGC 105 also functions as a call agent providing the call control and call state maintenance operations. The MGC 105 may load a new DM 104 on ROOT level to a MG 101 during the configuration or during a call on ROOT/ individual termination level and also MGC 105 can override the timers associated to the DM 104. The MGC 105 distinguishes the request to change only the timer values or also the DM 104 pattern. The MGC 105 sends the DM 104 name and the timer values to be modified to the MG 101 if the request is only for timer values. MGC 105 also checks if the DM 104 name specified in the request message is known or not. If the DM 104 name is not known, then MGC 105 creates a new DM 104 name and provides the DM 104 name and the timer values to be modified to MG 101. When DM 104 name is known to MGC 105, it provides the same DM 104 name and the timer values that are to be modified to MG 101. MGC 105 further check whether the request is for ROOT level or termination level and provides corresponding modify command to MG 101.

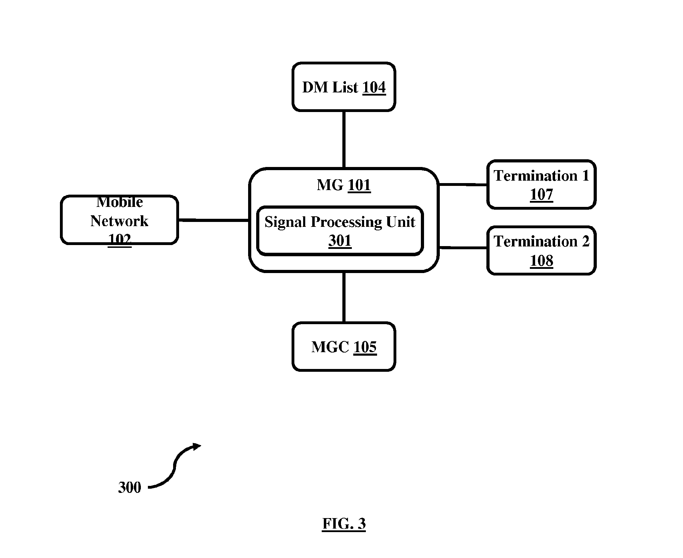

26. FIG. 3 is a block diagram illustrating the functional elements of a Media Gateway (MG), according to an embodiment herein. The MG 101 comprises of a physical interface to a first network instanced as mobile network 102, another physical interfaces with termination-1 107 and termination-2 108, and a signal processing unit 301 providing functions required for protocol conversions between the two interfaces. MG 101 accepts the modify request from the MGC 105 and checks if the DM specified in the modify request is known or not. If the DM 104 is known, then MG 101 modifies the timer values according to the values specified on the DM 104 pattern. If the DM 104 specified in modify request from MGC 105 is not known to MG 101, then MG 101takes the default DM 104 pattern and updates the timer value and maps the new DM 101 to the specified DM 104 name. For ROOT level modify request, MG 101 takes the DM pattern of the MG ROOT level default DM 104 and takes the DM 104 pattern of the existing DM 104 at the specified termination in MG for termination level modify request. The new DM created for ROOT level modify request is applicable only for ROOT level for the MG 101 and the DM 104 created at termination level modify request is applicable only for the specified termination.

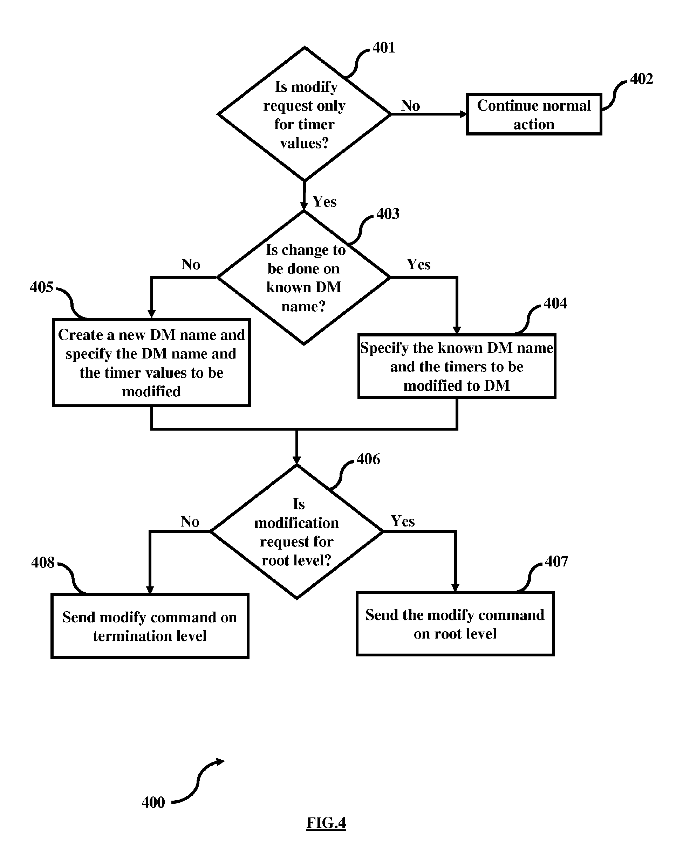

27. FIG. 4 illustrates a flowchart depicting a method of modifying the DigitMap timer value at MGC level, according to an embodiment herein. The MGC 105 performs a check (401) to identify if the modify request is to change only the timer values associated to a DM. If the modify request is for timer values and also for the DM pattern, then the MGC 105 continues (402) with normal process of modification. If the modify request is only for timer values, then MGC 105 performs a further check (403) to find if the modification is to be performed on a known DM name or an unknown DM name. If the modification is for a known DM, the MGC 105 then specifies (404) the known DM name and the timers are modified to MG 101. If the modification is for unknown DM, then MGC 105 creates (405) a new DM name and specifies the DM name and the timer values are modified to MG 101. The MGC 105 further performs a check (406) to determine if the modify request is for ROOT level or individual termination level. If the request is on ROOT level, then MGC 105 sends (407) a modify command on ROOT level to MG and if the request is only on termination level, then MGC 105 sends (408) a modify command on termination level to MG 101. The various actions in method 400 may be performed in the order presented, in a different order, or simultaneously. Further, in some embodiments, some actions listed in FIG. 4 may be omitted.

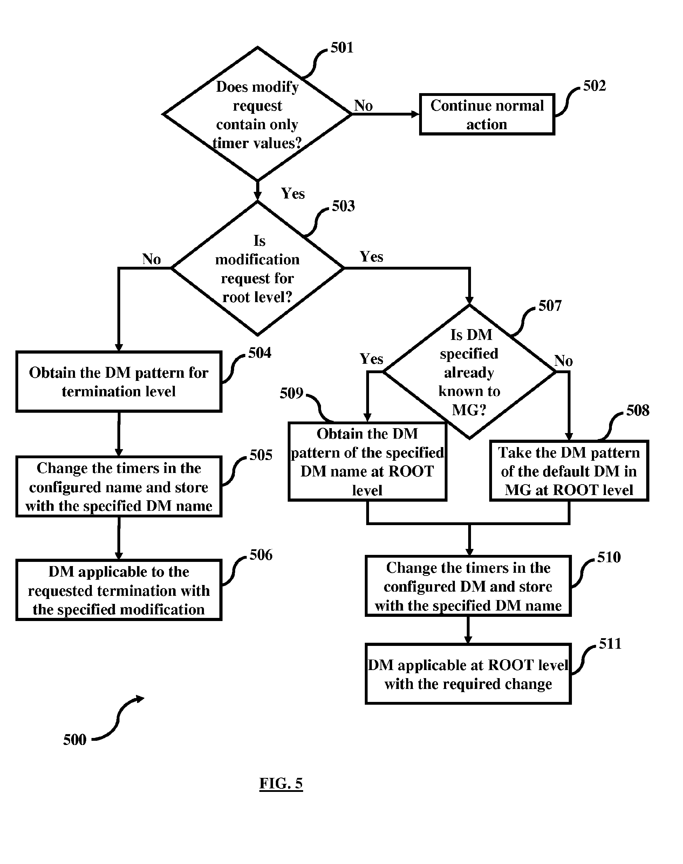

28. FIG. 5 illustrates a flowchart depicting a method of modifying the DigitMap timer value at MG level, according to an embodiment herein. The MG 101 checks (501) whether the request from MGC 105 to modify the DM 104 contains only timer values or not. If the modify request contains both timer values and the DM pattern, then MG 101 continues (504) with normal action. If the modify request contains only timer values, then MG 101 performs a further check (503) to find if the modify request is for ROOT level or individual termination level. If the modify request is only on termination level, then MG 101 obtains (504) the DM pattern which is currently applied on the termination level. The DM pattern can be a default DM at MG 101 or MGC provisioned one or more already configured different DMs. After obtaining the DM pattern, the MG then updates (505) the timers according to the timer values configured in the DM and stores the new DM with the specified DM name. The new DM can be applied (506) only to the requested termination with the specified modifications. If the modify request is only on ROOT level, the MG 101 performs a further check (507) to find if the DM specified by the MGC 105 is already known to MG 101 or not. If the DM name is known to MG 101, then take (508) the DM pattern of the default DM in MG 101 at ROOT level. If the DM name is not known to MG 101, then obtain (509) the DM pattern of the specified DM name which is configured for ROOT level. Further, change (510) the timer values in the configured DM and store DM with the DM name specified at ROOT level. The new DM is applicable (511) only at ROOT level for the MG with the required modifications for all terminations with no specified DM. The various actions in method 500 may be performed in the order presented, in a different order, or simultaneously. Further, in some embodiments, some actions listed in FIG. 5 may be omitted.
29. Embodiments disclosed herein can be provisioned to provide all the DM names to MGC during the time MG registers to an MGC. The MGC may use the DM names to modify timers by specifying the DM name wherever the MGC has not loaded the DM. Further, this is useful in MGC to overcome the creation of a unique DM name whenever MGC is unaware of a DM provisioned for a termination and needs to modify the timer values. The overhead in MGC can be completely overcome to know the default DM pattern loaded in MG for a termination. The MGC need not send separate query (AuditValue) to get the DM pattern and then to send the actual modify request to change timer values. The Size of the H.248 message for the simple timer change in a DM can be considerably reduced by sending only the timer values to be modified and not the complete associated DM pattern. This in turn reduces the memory usage drastically. The amount of data transfer in H.248 link can be reduced which results in improved traffic maintenance and minimizes traffic loss probability thereby increasing operator revenues and increasing network/service availability for end-users. Further, the embodiments overcome the time delay in processing the request for MGC to MG transaction to get a DM to modify the timer values and also the time delay to parse the H.248 message with the complete DM pattern in MG.
30. Embodiments disclosed herein can be extended to any Soft switch in IMS/Non-IMS configuration and also the controlled MG which communicate through H.248 protocol interface. Further, the method can be implemented or provided over next generation networks across operators without any interoperability issues.

## Claims

1. A method of modifying a dialing plan in a Media Gateway (MG) (101) by providing a DigitMap (DM) pattern and timer values, said method comprising steps of
a Media Gateway Controller (MGC) (105) checking (401) if modify request is for timer values and for DigitMap (104) pattern; and
if said modify request is only for timer values, said method further comprising steps of
said MGC checking (403) if said DM (104) name is known to MGC (105);
if said DM (104) name is known, said MGC (105) specifying (404) said DM (104) name and said timer values to be modified to said MG (101); and
if said DM (104) name is unknown to said MGC, the method further comprising of
said MGC (105) creating (405) a new said DM (104);
said MGC (105) specifying said new DM (104) name and said timer values to be modified to said MG;
said MG (101) verifying said DM (104) pattern specified in said modify request; and
said MG (101) modifying said timer values specified in said DM (104) pattern.

2. The method, as claimed in claim 1, wherein said DigitMap (104) pattern and said timer values can be modified at said MG (101).

3. The method, as claimed in claim 1, wherein said MGC (105) further performs steps of :
checking (401) (501) if said modify request for said timers is associated to said DM (104) and said DM (104) pattern;
checking (403) (507) if said DM (104) name is known to MGC (105);
specifying (404) said DM (104) name and said timer values to be modified to said MG (101)if said DM (104) name is known;
creating (405) a new said DM (104) name if said DM (104) name is not known to said MGC (105);
specifying said new DM (104) name and said timer values to be modified to MG (101);
checking (406) (303) if said DM (104) specified in said modify request is for ROOT level and for termination level;
sending (407) a modify command on ROOT level if modify request is for ROOT level; and
sending (408) a modify command on termination level for modify request on termination level.

4. The method, as claimed in claim 1, wherein said MG (101) further performs steps of:
checking (401) (501) if said modify request from MGC (105) is only for said timer values;
checking (403) (507) if said DM (104) specified in said modify request is known in said MG (101);
modifying said timer values on said DM (104) pattern associated to said DM (104) name if said DM (104) is known in MG (101);
if said DM (104) name specified in said modify request is not know in MG (101), said MG (101)further comprising at least one means adapted for performing at least one of:
checking (406) (503) if said DM (104) is on ROOT level modify request;
checking (406) (503) if said DM (104) is on termination level modify request;
obtaining (504) DM (104) pattern of said MG (101)ROOT level default DM (104) for ROOT level;
obtaining (504) said DM (104) pattern of said DM (104) at specified termination level in said MG (101);
updating (505) said timer values at ROOT level and termination level; and
mapping said new DM (104) to specified said DM (104) name.

5. A system for handling DigitMap (DM (104)) by providing said DigitMap name and said timer values to be modified to a Media Gateway (MG) (101), said system comprising at least one means adapted for
checking (401) if modify request is for said timer values and for said DigitMap (104) pattern; and
if said modify request is only for said timer values, said system further comprising at least one means adapted for
checking (403) if said DM (104) name is known to MGC (105);
if said DM (104) name is known, said system comprising at least one means adapted for (105) specifying (404) said DM (104) name and said timer values to be modified;
if said DM (104) name is unknown to said MGC, the system further comprising at least one means adapted for creating (405) a new said DM (104) if said DM (104) name is not known to MGC (105);
specifying said new DM (104) name and said timer values to be modified to MG (101);
verifying said DM (104) pattern specified in said modify request; and
modifying said timer values specified in said DM (104) pattern.

6. The system, as claimed in claim 5, wherein said DigitMap pattern and said timer values can be modified at said MG (101).

7. The system, as claimed in claim 5, wherein said MGC (105) comprises at least one means adapted for
checking (401) (501) if said modify request for said timers is associated to said DM (104) and said DM (104) pattern;
checking (403) (507) if said DM (104) name is known to MGC (105);
specifying (404) said DM (104) name and said timer values to be modified to said MG (101) if said DM (104) name is known;
creating (405) a new said DM (104) name if said DM (104) name is unknown to said MGC (105);
specifying said new DM (104) name and said timer values to be modified to MG (101);
checking (406) (503) if said DM (104) specified in said modify request is for ROOT level and for termination level;
sending (407) a modify command on ROOT level if modify request is for ROOT level; and
sending (408) a modify command on termination level for modify request on termination level.

8. The system, as claimed in claim 5, wherein said MG (101) comprises at least one means adapted for:
checking (401) (501) if said modify request from MGC (105) is only for said timer values;
checking (403) (507) if said DM (104) specified in said modify request is known in said MG (101)S;
modifying said timer values on said DM (104) pattern associated to said DM (104) name if said DM (104) is known in MG (101);
if said DM (104) name specified in said modify request is not known in MG (101), said MG (101)further comprising at least one means adapted for performing at least one of:
checking (406) (503) if said DM (104) is on ROOT level modify request;
checking (406) (503) if said DM (104) is on termination level modify request;
obtaining (504) DM (104) pattern of said MG (101) ROOT level default DM (104) for ROOT level;
obtaining (504) said DM (104) pattern of said DM (104) at specified termination level in said MG (101);
updating (505) said timer values at ROOT level and termination level; and
mapping said new DM (104) to specified said DM (104) name.

9. A Media Gateway Controller (MGC) (105), wherein said MGC (105) comprising at least one means adapted for:
checking (401) (501) if modify request for timers is associated to DM (104) and said DM (104) pattern;
checking (403) (507) if said DM (104) name is known to MGC (105);
specifying (404) said DM (104) name and said timer values to be modified to said MG (101)if said DM (104) name is known;
creating (405) a new said DM (104) name if said DM (104) name is unknown to said MGC (105);
specifying said new DM (104) name and said timer values to be modified to MG (101);
checking (406) (503) if said DM (104) specified in said modify request is for ROOT level and for termination level;
sending (407) a modify command on ROOT level if modify request is for ROOT level; and
sending (408) a modify command on termination level for modify request on termination level.

10. A Media Gateway (MG) (101), wherein said MG (101) comprising of at least one means adapted for
checking (401) (501) if modify request from MGC (105) is only for timer values;
checking (403) (507) if DM (104) specified in said modify request is known in said MG;
modifying said timer values on said DM (104) pattern associated to said DM (104) name if said DM (104) is known in MG (101);
if said DM (104) name specified in said modify request is not known in MG (101), said MG (101) further comprising at least one means adapted for performing at least one of:
checking (406) (503) if said DM (104) is on ROOT level modify request;
checking (406) (503) if said DM (104) is on termination level modify request;
obtaining (504) DM (104) pattern of said MG (101)ROOT level default DM (104) for ROOT level;
obtaining (504) said DM (104) pattern of said DM (104) at specified termination level in said MG (101);
updating (505) said timer values at ROOT level and termination level; and
mapping said new DM (104) to specified said DM (104) name.
